# FASCICULE DE BREVET EUROPEEN

(11) **EP 2 406 484 B1**
(45) Date de publication et mention de la délivrance du brevet: **24.07.2013**
(21) Numéro de dépôt: 10708757.9
(22) Date de dépôt: 09.03.2010
(51) Int. Cl.: B64D 35/06, F02K 3/072, F02C 3/10, F02C 7/36, F02C 3/067, F01D 5/02

(54) **DISPOSITIF D'ENTRAINEMENT D'UNE PAIRE D'HELICES CONTRAROTATIVES PAR UN TRAIN EPYCYCLOÏDAL**
VORRICHTUNG ZUM ANTRIEB EINES PAARS GEGENLÄUFIGER PROPELLER MITTELS EINES PLANETENRADSATZES
DEVICE FOR DRIVING A PAIR OF COUNTER-ROTATING PROPELLERS BY MEANS OF AN EPICYCLIC GEAR TRAIN

(30) Priorité: 11.03.2009 FR 0951509
(43) Date de publication de la demande: 18.01.2012
(73) Titulaire: Snecma, 75015 Paris (FR)
(72) Inventeur: CHARIER, Gilles, Alain, F-77130 La Grande Paroisse (FR); GALLET, François, F-75012 Paris (FR)
(74) Mandataire: Ilgart, Jean-Christophe
(86) Numéro de dépôt international: PCT/EP2010/052963
(87) Numéro de publication internationale: WO 2010/102995

(56) Documents cités:
- EP-A2- 1 887 199
- FR-A1- 2 641 333
- GB-A- 2 225 297
- US-A- 4 817 382

## Description

Le sujet de l'invention est un dispositif d'entraînement d'une paire d'hélices contrarotatives à l'aide d'un train épicycloïdal selon la revendication 1.

Les hélices contrarotatives sont déjà connues, et elles sont aussi envisagées pour certains aéronefs futurs afin de diminuer la consommation de carburant. La transmission de la puissance aux hélices peut comprendre un train épicycloïdal. La turbine de puissance (à basse pression) fait tourner un arbre mettant en rotation une roue planétaire (roue solaire) du train épicycloïdal. La roue planétaire entraîne elle-même des roues satellites, et un porte-satellites relié à l'arbre d'une des hélices. Le train épicycloïdal comprend encore une couronne extérieure, à denture interne et engrenant avec les satellites, et reliée à l'arbre de l'autre des hélices. Un choix judicieux des rapports de denture assure donc les rotations des hélices dans les deux sens opposés au rapport de vitesses voulu. Un tel agencement est décrit dans le document US-A- 4 817 382 ; quant au document EP-A- 1 887 199, il décrit un agencement où un porte-satellites d'un train épicycloïdal est soutenu à l'extrémité d'un arbre tournant par un joint souple absorbant des déformations et permettant de réduire les contraintes dans le train.

Le train épicycloïdal a l'avantage d'être compact, mais il est soumis à des efforts élevés risquant d'endommager les dents. L'objet principal de l'invention est d'alléger ces efforts en lui permettant de transmettre essentiellement le couple moteur nécessaire à la transmission, tout en réduisant les efforts parasites tels que ceux qui proviennent de désalignements des roues dentées. Mais le dispositif doit tout de même résister à des efforts importants qui s'exercent sur lui dans certaines circonstances.

Cette double exigence est satisfaite avec l'invention qui, sous une forme générale, concerne un dispositif conforme à la revendication indépendante.

Au lieu de soutenir la roue planétaire par l'arbre de turbine, affecté au support du rotor de la turbine sur le carter, on utilise le manchon souple, qui tolère des variations de position de son axe selon les efforts radiaux subis par la roue planétaire. Les efforts développés dans le train épicycloïdal diminuent donc. Toutefois, comme le jeu entre l'arbre de turbine fixe et le manchon souple est faible, une position de butée du manchon contre l'arbre est atteinte quand des forces plus importantes s'exercent dans la transmission. Une souplesse excessive, qui pourrait causer un mauvais fonctionnement du dispositif ou une destruction, en premier lieu par rupture du manchon, est empêchée, et les efforts importants qu'on peut rencontrer occasionnellement sont transmis à l'arbre de turbine rigide et résistant.

Il est avantageux que l'arbre de turbine soit suffisamment long afin qu'il fournisse un support plus stable et que des porte-à-faux du manchon hors de l'arbre de turbine soient évités quand une butée est réalisée. Une distance entre deux roulements de support de l'arbre de turbine est donc supérieure à une distance présente entre un des roulements et la roue planétaire.

L'agencement de l'invention doit être supérieur à celui du document EP-A- 1 887 199 pour les raisons que voici : le manchon de l'invention, plus long que le joint souple de ce document, autorise des débattements plus grands et donc une meilleure souplesse et une meilleure réduction des efforts internes ; le soutien par l'arbre de turbine une fois que le jeu a été consommé offre toutefois une limite bien définie au débattement tout en protégeant le manchon contre des déformations excessives ; et la disposition du manchon dans l'arbre de turbine permet de placer le train épicycloïdal à faible distance du plus proche roulement de support de l'arbre, ce qui diminue l'encombrement et le porte-à-faux, alors que le train du document antérieur est fortement avancé au-delà du roulement pour permettre l'installation du joint souple.

Une bonne souplesse du manchon est obtenue s'il forme un coude en demi-cercle à une extrémité de raccordement à la turbine, ou encore s'il comprend une section pourvue d'évidements oblongs, orientés avec un angle de 45° par rapport à une direction axiale du manchon, ce qui affaiblit localement le manchon d'une façon qui le rend plus souple en flexion, mais maintient sa résistance en torsion de manière à lui permettre de transmettre le couple requis. La section évidée peut être établie, quand le coude existe, à sa jonction à une portée principale du manchon.

Une réduction plus grande des efforts est obtenue dans le train épicycloïdal si l'arbre lié à la couronne est plus souple que l'arbre lié au porte-satellites. L'ensemble lié au porte-satellites, comparativement rigide, est alors situé entre un ensemble de roue planétaire et un ensemble de couronne comparativement souples et qui se déforment indépendamment selon les efforts respectifs qu'ils subissent.

L'invention sera maintenant décrite en liaison aux figures suivantes.
- la figure 1 est une vue générale du dispositif selon l'invention ;
- la figure 2 illustre les alentours du train épicycloïdal;
- la figure 3 illustre le train épicycloïdal en vue de face ;
- et la figure 4 illustre une portion particulière du manchon souple.

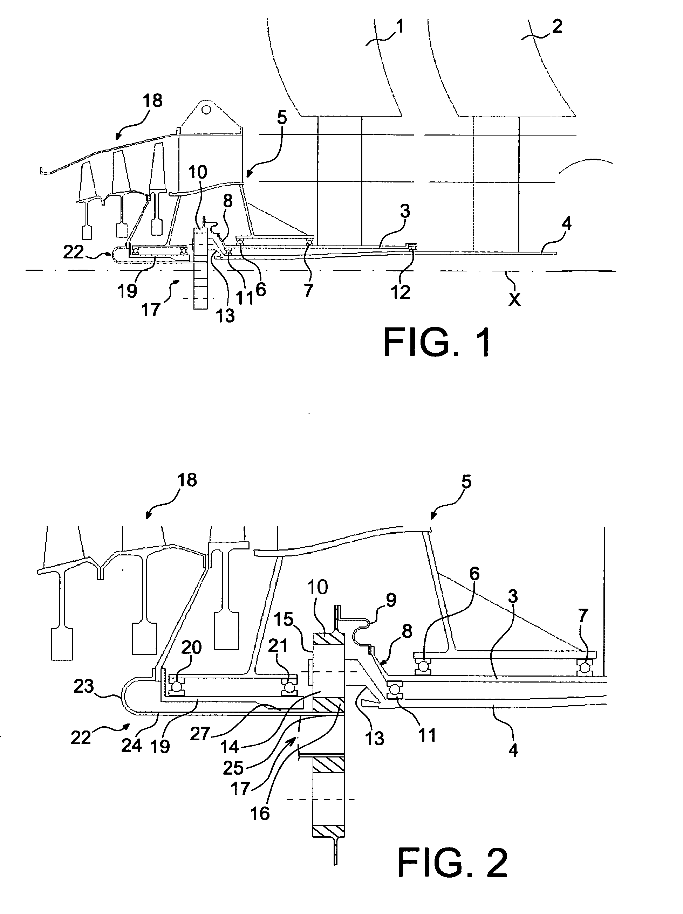

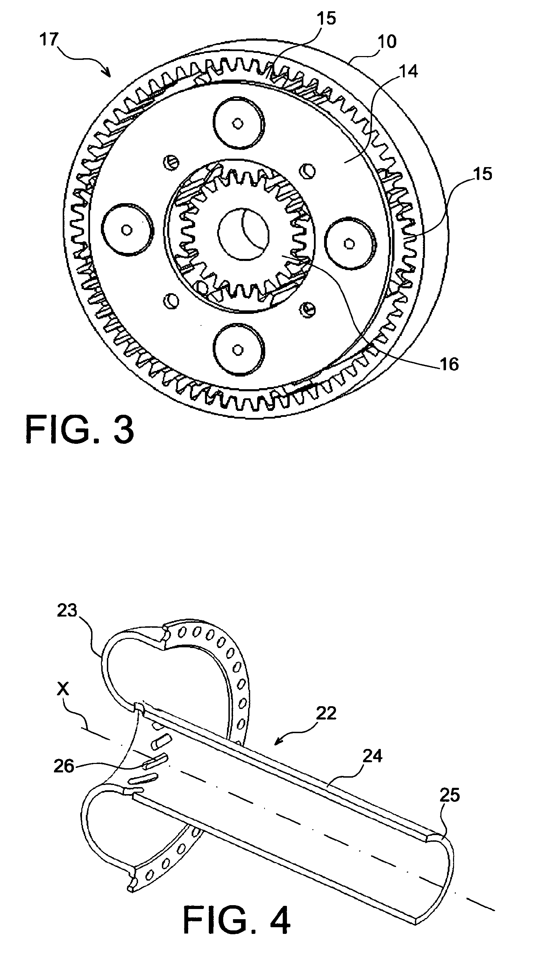

On se reporte aux figures 1 et 2. Le moteur dont l'invention fait partie comprend deux hélices 1 et 2 disposées successivement et tournant autour d'un même axe X. L'hélice amont 1 est montée sur un premier arbre creux 3 et l'hélice aval 2 sur un deuxième arbre creux 4. Le premier arbre creux 3 est en appui sur un carter statique 5 par une paire de roulements 6 et 7 au-delà desquels il s'épanouit en un manchon conique 8 pourvu de plis 9, et aboutit à une couronne 10 dentée intérieurement. Le deuxième arbre creux 4 est soutenu par le premier arbre creux 3 au moyen de deux roulements 11 et 12 et s'épanouit en un deuxième manchon conique 13, contenu dans le premier manchon conique 8 et qui est relié à un porte-satellites 14. Le porte-satellites 14 possède des roues dentées satellites 15 réparties sur un cercle et qui engrènent extérieurement avec la couronne 10 et, intérieurement, avec une roue planétaire (ou solaire) 16. L'ensemble constitue un train épicycloïdal 17 d'un genre classique qui est représenté à la figure 3.

Une turbine à basse pression 18 est située de l'autre côté du carter statique 5. Elle comprend un troisième arbre creux, qui est un arbre de turbine 19 servant à la faire soutenir par le carter statique 5 à l'aide de deux roulements 20 et 21. L'arbre de turbine 19 s'étend non loin de la roue planétaire 16, dont il est cependant séparé; le jeu entre la roue planétaire 16 et le roulement 21 le plus proche est inférieur à la distance entre les deux roulements 20 et 21. C'est un manchon souple 22 qui sert à l'entraînement de la roue planétaire 16 en la reliant au rotor de la turbine 18. Le manchon souple 22 se raccorde à la turbine 18 par un coude 23 en demi-cercle, non loin du raccordement à l'arbre de turbine 19. L'essentiel du manchon souple 22 est une portée 24 essentiellement cylindrique entourée par l'arbre de turbine 19 en en dépassant à une troisième extrémité 25 et servant de support de la roue planétaire 16. A la jonction entre le coude 23 et la portée 24, le manchon souple 22 est entaillé de trous oblongs 26, représentés au mieux à la figure 4 et dont la direction d'extension est à un angle de 45° par rapport à la direction axiale X du dispositif, qui correspond à l'axe de rotation de toutes les parties tournantes (sauf les satellites 15). Le manchon 22 est souple grâce à une épaisseur suffisamment faible, mais il fléchit surtout à la section où il est entaillé.

Le fonctionnement du dispositif peut être décrit comme suit: la turbine 18 entraîne la roue planétaire 16 par le manchon souple 22, ce qui induit des rotations du porte-satellites 14 et de la couronne 10 puis des hélices 2 et 1, à des vitesses déterminées. Le manchon souple 22 a la faculté de fléchir quand des efforts déséquilibrés en direction radiale sont imposés sur la roue planétaire 16. De même, le premier manchon conique 8 a la faculté de fléchir à l'endroit des plis 9 quand des efforts déséquilibrés en direction radiale sont exercés sur la couronne 10. Le montage du porte-satellites 14 à l'hélice 2, par le deuxième arbre creux 4 et le deuxième manchon conique 13, est par contre plus rigide, ce qui empêche une souplesse excessive du train épicycloïdal 17. Et le jeu 27 entre le manchon souple 22 et l'arbre de turbine 19 est faible à l'endroit du roulement 21 proche de la roue planétaire 16, ce qui limite les déformations que peut prendre le manchon souple 22 à des valeurs raisonnables et empêche notamment qu'il ne se rompe ou que le train épicycloïdal 17 ne devienne trop lâche. Comme le manchon souple 22 tourne à la même vitesse que l'arbre de turbine 19, aucune conséquence n'est à redouter de l'occurrence de cet état de butée qui ne produit aucune friction.

## Revendications

1. Dispositif comprenant une paire d'hélices contrarotatives (1,2), une turbine (18) d'entraînement, un arbre (19) lié à la turbine (18), un carter statique (5) soutenant la turbine (18) par l'arbre (19) et deux roulements (20, 21) dans lesquels l'arbre s'étend et qui soutiennent l'arbre, une transmission comprenant un train épicycloïdal (17) à roue planétaire (16) centrale entraînée par la turbine, un porte-satellites (14) entraînant une des hélices (2) et muni de roues satellites (15) engrenant avec la roue planétaire (16), et une couronne extérieure engrenant avec les satellites (15) et entraînant l'autre des hélices (1), une distance entre un des roulements (20, 21) et la roue planétaire est inférieure à une distance entre les deux roulements (20, 21), **caractérisé en ce qu'**il comprend un manchon (22) raccordé à la turbine (18) et à la roue planétaire (16) pour l'entraîner, et le manchon (22) comprend une portée (24) entourée par l'arbre (19), séparée de lui par un jeu (27) radial de limitation des déformations du manchon à l'endroit du roulement (21) proche de la roue planétaire (16), et le manchon est plus souple en flexion que l'arbre, de manière à fléchir quand des efforts déséquilibrés en direction radiale sont imposés à la roue planétaire (16).

2. Dispositif selon la revendication 1, **caractérisé en ce que** le manchon (22) comprend un coude (23) en demi-cercle à une extrémité de raccordement à la turbine.

3. Dispositif selon la revendication 1 ou 2, **caractérisé en ce qu'**il comprend une section pourvue d'évidements (26) oblongs, orientés avec un angle de 45° par rapport à une direction axiale X du manchon (22).

4. Dispositif selon les revendications 2 et 3, **caractérisé en ce que** la section est établie à une jonction du coude (23), éloignée du raccordement à la turbine, à la portée (24) principale, essentiellement cylindrique, du manchon.

5. Dispositif selon l'une quelconque des revendications 1 à 4, **caractérisé en ce qu'**un arbre (3, 8, 9) reliant la couronne à ladite autre hélice (1) est plus souple qu'un arbre (4, 13) reliant le porte-satellites (14) à ladite une des hélices (2).

## Patentansprüche

1. Vorrichtung, umfassend ein Paar von gegenläufigen Propellern (1, 2), eine Antriebsturbine (18), eine mit der Turbine (18) verbundene Welle (19), ein statisches Gehäuse (5), welches die Turbine (18) über die Welle (19) und zwei Wälzlager (20, 21), in denen die Welle verläuft und die die Welle stützen, trägt, eine Übertragungseinrichtung umfassend ein Planetengetriebe (17) mit über die Turbine angetriebenem zentralem Planetenrad (16), einen Satellitenradträger (14), der einen der Propeller (2) antreibt und mit Satellitenrädern (15), welche mit dem Planetenrad (16) kämmen, ausgestattet ist, sowie einen Außenkranz, der mit den Satellitenrädern (15) kämmt und den anderen der Propeller (1) antreibt, wobei ein Abstand zwischen einem der Wälzlager (20, 21) und dem Planetenrad geringer ist als ein Abstand zwischen den beiden Wälzlagern (20, 21), **dadurch gekennzeichnet, dass** sie eine Manschette (22) umfasst, die mit der Turbine (18) und mit dem Planetenrad (16), um es anzutreiben, verbunden ist, und die Manschette (22) eine von der Welle (19) umgebene Fläche (24) umfasst, die von dieser durch ein radiales Spiel (27) zum Begrenzen der Verformungen der Manschette an der Stelle des Wälzlagers (21) nahe dem Planetenrad (16) getrennt ist, und die Manschette biegeelastischer als die Welle ist, um nachzugeben, wenn in radialer Richtung nicht im Gleichgewicht befindliche Kräfte an das Planetenrad (16) angelegt werden.

2. Vorrichtung nach Anspruch 1, **dadurch gekennzeichnet, dass** die Manschette (22) eine halbkreisförmige Krümmung (23) an einem Ende zum Anschließen an die Turbine umfasst.

3. Vorrichtung nach Anspruch 1 oder 2, **dadurch gekennzeichnet, dass** sie einen Abschnitt umfasst, der mit unter einem Winkel von 45° gegenüber einer axialen Richtung X der Manschette (22) ausgerichteten länglichen Ausnehmungen (26) versehen ist.

4. Vorrichtung nach den Ansprüchen 2 und 3, **dadurch gekennzeichnet, dass** der Abschnitt an einer von dem Anschluss an die Turbine entfernten Verbindung der Krümmung (23) mit der im Wesentlichen zylindrischen Hauptfläche (24) der Manschette eingerichtet ist.

5. Vorrichtung nach einem der Ansprüche 1 bis 4, **dadurch gekennzeichnet, dass** eine Welle (3, 8, 9), die den Kranz mit dem anderen Propeller (1) verbindet, flexibler ist als eine Welle (4, 13), die den Satellitenradträger (14) mit dem einen der Propeller (2) verbindet.

## Claims

1. Mechanism comprising a pair of contrarotating propellers (1, 2), a drive turbine (18), a shaft (19) connected to the turbine (18), a static casing (5) supporting the turbine (18) through the shaft (19) and two bearings (20, 21) in which the shaft extends and which support the shaft, a transmission comprising an epicyclic gear train (17) with a central planet gear (16) driven by the turbine, a planet pinion cage (14) driving one of the propellers (2) and fitted with satellite gears (15) engaging with the planet gear (16), and an outer ring engaging with the satellite gears (15) and driving the other propeller (1), a distance between one of the bearings (20, 21) and the planet gear (16) is less than a distance between the two bearings (20, 21), **characterised in that** it comprises a sleeve (22) connected to the turbine (18) and to the planet gear (16) to drive it, and the sleeve (22) comprises a surface (24) surrounded by the shaft (19), separated from it by a radial clearance (27) which limits deformations that can be applied to the sleeve at the location of the bearing (21) which is close to the planet gear (16), and the sleeve is more flexible in bending than the shaft, so as to deflect when unbalanced forces are imposed on the planet gear (16).

2. Mechanism according to claim 1, **characterised in that** the sleeve (22) forms a semicircular bend (23) at one end of the connection to the turbine.

3. Mechanism according to claim 1 or 2, **characterised in that** it comprises a section with oblong openings (26), oriented at an angle of 45° from an axial direction X of the sleeve (22).

4. Mechanism according to claims 2 and 3, **characterised in that** the section is located at a junction of the bend (23), remote from the connection to the turbine, at the main, essentially cylindrical, contact surface (24) of the sleeve.

5. Mechanism according to any one of claims 1 to 4, **characterised in that** a shaft (3, 8, 9) connecting the ring to said other propeller (1) is more flexible than a shaft (4, 13) connecting the planet pinion cage (14) to said one of the propellers (2).
